# EUROPÄISCHE PATENTSCHRIFT

(11) **EP 3 840 976 B1**
(45) Veröffentlichungstag und Bekanntmachung des Hinweises auf die Patenterteilung: **19.07.2023**
(21) Anmeldenummer: 19755592.3
(22) Anmeldetag: 14.08.2019
(51) Int. Cl.: B60L 3/00, B60W 50/023, B60L 58/19

(54) **VERFAHREN ZUM BETREIBEN EINES HYBRIDEN ELEKTRISCHEN ANTRIEBSSYSTEMS, ANTRIEBSSYSTEM UND VERWENDUNG DES ANTRIEBSSYSTEMS BEI EINEM LUFTFAHRZEUG**
METHOD FOR OPERATING A HYBRID ELECTRIC DRIVE SYSTEM, DRIVE SYSTEM, AND USE OF THE DRIVE SYSTEM IN AIRCRAFT
PROCÉDÉ POUR FAIRE FONCTIONNER UN SYSTÈME D'ENTRAÎNEMENT ÉLECTRIQUE HYBRIDE, SYSTÈME D'ENTRAÎNEMENT ET UTILISATION DU SYSTÈME D'ENTRAÎNEMENT DANS UN AÉRONEF

(30) Priorität: 24.08.2018 DE 102018120736
(43) Veröffentlichungstag der Anmeldung: 30.06.2021
(73) Patentinhaber: Deutsches Zentrum für Luft- und Raumfahrt e.V., 53227 Bonn (DE); H2Fly GmbH, 71549 Auenwald (DE)
(72) Erfinder: SCHIRMER, Johannes, 71549 Auenwald (DE); FLADE, Steffen, 71083 Herrenberg (DE)
(74) Vertreter: Fleck, Julia Maria
(86) Internationale Anmeldenummer: PCT/EP2019/071859
(87) Internationale Veröffentlichungsnummer: WO 2020/038808

(56) Entgegenhaltungen:
- EP-A1- 2 570 292
- EP-A1- 2 570 292
- EP-A1- 2 887 536
- EP-A1- 2 887 536
- EP-A2- 2 886 387
- EP-A2- 2 886 387
- WO-A1-2015/195856
- WO-A1-2017/113338
- DE-A1-102009 017 458
- DE-A1-102009 017 458
- DE-A1-102012 207 379
- DE-A1-102014 014 838
- DE-A1-102014 014 838
- DE-A1-102015 200 124
- DE-A1-102015 200 124
- DE-A1-102016 218 842
- DE-A1-102016 218 842
- US-A1- 2016 176 534
- US-A1- 2016 176 534
- Dr J Kallo ET AL: "Antares DLR-H2 -Flying Test Bed for Development of Aircraft Fuel Cell Systems", Fuel Cell Seminar, 11. August 2017 (2017-08-11), XP055621735, Gefunden im Internet: URL:https://web.archive.org/web/2017081123 4444if_/http://elib.dlr.de/85057/1/Fuel_Ce ll_Seminar_2013_Antares_DLR_H2_(2).pdf [gefunden am 2019-09-12]
- P. RATHKE ET AL: "Antares DLR-H2 Flying Test Bed for Development of Aircraft Fuel Cell Systems", ECS TRANSACTIONS, Bd. 51, Nr. 1, 26. Juni 2013 (2013-06-26), Seiten 229-241, XP055621738, US ISSN: 1938-6737, DOI: 10.1149/05101.0229ecst
- Boeing: "AERO QTR_04 07", , 5. Oktober 2007 (2007-10-05), XP055225979, http://www.boeing.com/commercial/aeromagaz ine/articles/2015_q1/archive.html Gefunden im Internet: URL:http://www.boeing.com/commercial/aerom agazine/articles/qtr_4_07/AERO_Q407.pdf [gefunden am 2015-11-04]
- Dr J Kallo ET AL: "Antares DLR-H2 -Flying Test Bed for Development of Aircraft Fuel Cell Systems", Fuel Cell Seminar, 11 August 2017 (2017-08-11), XP055621735, Retrieved from the Internet: URL:https://web.archive.org/web/2017081123 4444if_/http://elib.dlr.de/85057/1/Fuel_Ce ll_Seminar_2013_Antares_DLR_H2_(2).pdf [retrieved on 2019-09-12]
- P. Rathke ET AL: "Antares DLR-H2 Flying Test Bed for Development of Aircraft Fuel Cell Systems", ECS Transactions, vol. 51, no. 1, 26 June 2013 (2013-06-26), pages 229-241, XP055621738, US ISSN: 1938-6737, DOI: 10.1149/05101.0229ecst
- Boeing: "AERO QTR_04 07", , 5 October 2007 (2007-10-05), XP055225979, http://www.boeing.com/commercial/aeromagaz ine/articles/2015_q1/archive.html Retrieved from the Internet: URL:http://www.boeing.com/commercial/aerom agazine/articles/qtr_4_07/AERO_Q407.pdf [retrieved on 2015-11-04]
- Christine Ross ET AL: "Turboelectric Distributed Propulsion Protection System Design Trades", SAE 2010 COMMERCIAL VEHICLE ENGINEERING CONGRESS SAE TECHNICAL PAPERS, vol. 1, 16 September 2014 (2014-09-16), XP055425021, US ISSN: 0148-7191, DOI: 10.4271/2014-01-2141
- BERG FREDERICK ET AL: "HTS Electrical System for a Distributed Propulsion Aircraft", IEEE TRANSACTIONS ON APPLIED SUPERCONDUCTIVITY, IEEE, USA, vol. 25, no. 3, 1 June 2015 (2015-06-01), pages 1-5, XP011572585, ISSN: 1051-8223, DOI: 10.1109/TASC.2014.2384731 [retrieved on 2015-02-05]

## Beschreibung

Die Erfindung betrifft ein Verfahren zum Betreiben eines hybriden elektrischen Antriebssystems, bei dem elektrische Energie aus zumindest zwei, in jeweils einem Teilstrang eines Energielieferstrangs angeordneten, energieliefernden Einheitenaus dem Energielieferstrang einer Verbrauchereinheit zu deren Energieversorgung zugeführt werden kann, wobei die elektrische Energie vor Zufuhr in die Verbrauchereinheit über eine in dem Energielieferstrang vorhandene erste Spannungswandlungseinrichtung geführt wird. Die Erfindung betrifft ferner ein hybrides elektrisches Antriebssystem und die Verwendung eines hybriden elektrischen Antriebssystems bei einem Luftfahrzeug.

Ein derartiges Verfahren und ein hybrides elektrisches Antriebssystem sind in der DE 10 2012 207 379 A1 angegeben. Dabei sind zur Versorgung eines elektrischen Antriebs mit elektrischem Strom drei Gleichspannungswandler zur Kopplung mindestens zweier elektrischer Energiequellen vorhanden und zum Betrieb mehrere Betriebsarten vorgesehen.

Unterschiedliche hybride elektrische Antriebssysteme sowie Verfahren zu deren Betrieb, gemäß der eingangs genannten Art, sind in der Dissertation "Marx, Matthias: Multiobjective Optimization of the Power Flow Control of Hybrid Electric Power Train Systems within Simulation and Experimental Emulation Applications, univ. Diss, Universität Duisburg-Essen, 2014" angegeben. So sind beispielsweise in einer grundlegenden Struktur eines hybriden elektrischen Systems, einem sogenannten Direkt-hybrid, die energieliefernden Einheiten über einen Inverter als Spannungswandlungseinrichtungen direkt an einen Verbraucher, beispielsweise einen Motor, angeschlossen, um diesen mit elektrischer Energie zu versorgen. In anderen Strukturen können in unterschiedlicher Weise weitere, dem Inverter vorgeschaltete Spannungswandlungseinrichtungen vorhanden sein, die zwischen die energieliefernden Einheiten zur Abstimmung deren Spannungsniveaus geschaltet sind.

In einem veröffentlichten Vortrag von Dr. J. Kallo et. al: "Antares DLR-H2 - Flying Test Bed for Development of Aircraft Fuel Cell Systems", Fuel Cell Seminar, 11. August 2017 ist ein konventionelles Hybridsystem in Gegenüberstellung zu einem Direkthybridsystem bei Luftfahrtanwendungen gezeigt, wobei Spannungswandler in Teilsträngen eines Energielieferstrangs sowie ein Lastverteiler zwischen den energieliefernden Einheiten und einem Verbraucher im Energielieferstrang angeordnet sind.

In der Veröffentlichung von P. Rathke et al: "Antares DLR-H2 Flying Test Bed for Development of Aircraft Fuel Cell Systems", ECS TRANSACTIONS 2013 ist ein Flugprüfstand zum Test von Brennstoffzellenanwendungen in der Luftfahrt vorgestellt, wobei ein Direkt-Hybridsystem mit selbstregulierender Lastverteilung angegeben ist.

Die DE 10 2014 014 838 A1 zeigt ein redundantes Energieversorgungssystem für ein Bordnetz eines Kraftfahrzeugs zur Verbesserung der Versorgung eines sicherheitskritischen Verbrauchers. Bei einem Ausführungsbeispiel mit einer Drehfeldmaschine als Spannungswandlungseinrichtung können die Wicklungen in Anordnung zu ihren Wechselrichtern mehrere Spannungswandler bilden. Mittels einer Steuervorrichtung kann zwischen zwei unterschiedlichen Betriebsmodi, nämlich einem Normalbetrieb und einem Fehlerbetrieb umgeschaltet werden. Dabei wird jeweils nur eine der Energieversorgungen belastet.

In der EP 2 887 536 A1 und ähnlich auch in der die gleiche Problematik betreffenden EP 2 886 387 A2 ist ein Steuerungssystem mit einer redundanten Motor-/Generatormaschinenanordnung in Verbindung mit einer Gasturbine sowie ein elektrisches Energiespeichersystem angegeben, wobei mittels des Steuerungssystems verschiedene Betriebsmodi zur Versorgung von Verbraucherkomponenten steuerbar sind. Ein elektrisches System umfasst bei einer Ausführung zwei Untersysteme und die mit dem elektrischen Energiespeichersystem verbunden sind und Komponenten der Verbrauchereinheit mit elektrischer Energie versorgen können.

Die DE 10 2016 218 842 A1 zeigt einen elektrischen Antrieb für ein Fahrzeug mit zwei Energiequellen, die z. B. als Brennstoffzelle, Batterie oder Kondensator ausgebildet sein können. Dabei können zwei Gleichstromwandler elektrisch parallel angeordnet sein. Mittels eines schaltbaren Leitungsabschnitts in den Verbindungsleitungen kann der erste und/oder der zweite Gleichstromwandler umgangen werden.

In der US 2016/176534 A1 ist ein hybrides elektrisches Antriebssystem für ein Flugzeug angegeben. Das System weist in unterschiedlichen Antriebssträngen zwei Turbinen mit jeweils einem vorgeschalteten Gleichrichter auf.

Weitere Verfahren und Vorrichtungen zum Betreiben eines elektrischen Antriebssystems sind in der EP 2 570 292 A1, der DE 10 2009 017 458 A1, der Druckschrift Boeing: "AERO QTR_04 07", 5. Oktober 2007 und der DE 10 2015 200 124 A1 vorgestellt.

Die DE 10 2005 021 722 A1 zeigt ein hybrides System zum Antrieb eines Fahrzeugs mit beispielsweise einer Brennstoffzelleneinheit und/oder einer Traktionsbatterie, einem Motor als Antriebseinheit und einem Antriebsumrichter. Der Schwerpunkt liegt auf einer Anpassungsvorrichtung, mittels welcher die von der bzw. den elektrochemischen Einheit/en zur Verfügung gestellte elektrische Spannung auf eine Spannung zum Betreiben des Motors einstellbar ist.

Die DE 10 2010 041 625 A1 offenbart einen DC/DC-Wandler mit einer Vielzahl an elektrisch parallel verschalteten Einzelwandlern, um eine Brennstoffzelle für die elektrische Versorgung bei mobilen Anwendungen zu nutzen.

Der Erfindung liegt die Aufgabe zugrunde, ein Verfahren zum Betreiben eines elektrischen hybriden Antriebssystems und ein elektrisches hybrides Antriebssystem bereitzustellen, die jeweils hohen Sicherheitsanforderungen genügen.

Die Aufgabe wird für das Verfahren mit den Merkmalen des Anspruchs 1, für das hybride elektrische Antriebssystem mit den Merkmalen des Anspruchs 3 und für die Verwendung des hybriden elektrischen Antriebssystems mit den Merkmalen des Anspruchs 5 gelöst.

Bei dem erfindungsgemäßen Verfahren ist vorgesehen, dass die elektrische Energie wahlweise über die in dem ersten Teilstrang angeordnete erste Spannungswandlungseinrichtung oder über die in dem zweiten Teilstrang angeordnete zweite Spannungswandlungseinrichtung geführt werden kann, die parallel zu der ersten Spannungswandlungseinrichtung angeordnet ist. Möglich sind auch weitere jeweils parallel angeordnete Spannungswandlungseinrichtungen. Die Energieführung kann selbsttätig (z. B. in Abhängigkeit von vorgegebenen Parametern bzw. Steuerungskriterien) oder wahlweise gesteuert oder geregelt erfolgen. Durch die so erhaltene Redundanz der Spannungswandlungseinrichtungen und die damit verbundene Möglichkeit, die elektrische Energie über die zweite Spannungswandlungseinrichtung zu führen, ergibt sich eine Ausfallsicherung und damit ein Antriebssystem, das durch die so erhaltene erhöhte Ausfallsicherheit erhöhten Sicherheitsanforderungen genügt und zudem flexibel abgestimmt in unterschiedlichen Situationen reagieren kann.

Die Verbrauchereinheit kann einen oder mehrere mit elektrischer Energie zu versorgende Verbraucher umfassen, beispielsweise ein bzw. mehrere Antriebsaggregat/e bei einem Luftfahrzeug. Die Spannungswandlungseinrichtungen dienen der Umwandlung der von der bzw. den energieliefernden Einheit/en bereitgestellten Spannung/en, in der Regel Gleichspannung/en, auf eine von der Verbrauchereinheit benötigte Versorgungsspannung bzw. elektrische Energie (z. B. ein entsprechendes Spannungsniveau bei einer Gleich- oder Wechselspannung oder eine benötigte Frequenz bei einer Wechselspannung). Die energieliefernden Einheiten können z. B. energiewandelnde und/oder Energie speichernde Einheiten sein. Bei der ersten energieliefernden Einheit kann es sich beispielsweise um ein Aggregat zur Energieumwandung aus einem Brennstoff, wie ein Brennstoffzellensystem oder ein Verbrennungsaggregat (Motor oder Gasturbine) mit Generator, und bei der zweiten energieliefernden Einheit z. B. um ein Batteriesystem, oder auch ein Supercap-System, handeln. Eine derartige Kombination kann vorteilhaft unterschiedliche Anforderungen an die Energiebereitstellung bedienen und zugleich für eine Redundanz der energieliefernden Einheit zur Ausfallsicherung der Energiequelle sorgen. Möglich sind auch zwei energieliefernde Einheiten gleicher Art.

Vorteilhafte Reaktionen auf unterschiedliche Ausfallszenarien und ein optimierter Betrieb des Antriebssystems bei unterschiedlichen Betriebsmodi werden dabei dadurch ermöglicht, dass die elektrische Energie vor Zufuhr in zumindest eine der beiden Spannungswandlungseinrichtungen über eine Steuerungseinrichtung zur Steuerung oder Regelung des Energieflusses geführt wird, die mit den beiden Teilsträngen elektrisch gekoppelt ist, und in der die Steuerung oder Regelung nach Maßgabe der unterschiedlichen Steuerungsmodi durchführbar ist. Die Steuerungseinrichtung kann als eine Art Leistung-Management-Modul dienen, wobei sie die Verschaltung der energieliefernden Einheiten bzw. der Teilstränge miteinander und/oder mit den Spannungswandlungseinrichtungen bzw. darüber mit der Verbrauchereinheit steuert bzw. regelt. Vorzugsweise sind dabei unterschiedliche Steuerungsmodi bzw. Schaltungsvarianten, für unterschiedliche Verfahrensführungsvarianten, hinterlegt, zwischen denen auch während des Betriebs des Antriebssystems flexibel gewechselt werden kann. Zu diesem Zweck weist die Steuerungseinrichtung z. B. Hardwarekomponenten, wie elektronische Bauelemente und/oder elektrische Verbindungsmittel, auf, die zum Erhalt der unterschiedlichen Schaltungsvarianten innerhalb der unterschiedlichen Steuerungsmodi unterschiedlich (miteinander) elektrisch koppelbar bzw. verschaltbar sind. Die unterschiedlichen Steuerungsmodi können sich z. B. aufgrund von Steuerungskriterien einstellen, die mit unterschiedlichen Betriebsmodi oder Ausfallszenarien gekoppelt sind bzw. sich aus diesen ergeben. Dies erlaubt eine (z. B. automatisierte) Anpassung des Energieflusses an unterschiedliche Betriebsmodi, insbesondere optimiert auf aktuelle Leistungsanforderungen der Verbrauchereinheit, und/oder Ausfallszenarien. So können für einen jeweiligen Betriebsmodus höhere Wirkungsgrade erzielt werden und/oder die energieliefernden Einheiten schonend betrieben werden.

In einer der wahlweisen Verfahrensvarianten wird die elektrische Energie zur Energieversorgung der Verbrauchereinheit nach Vorgabe bzw. durch entsprechende Einstellung der Steuerungseinrichtung in dem ersten Steuerungsmodus nur der ersten energieliefernden Einheit, und nicht der zweiten energieliefernden Einheit, entnommen, wobei der elektrische Strom wahlweise über die erste Spannungswandlungseinrichtung und/oder über die zweite Spannungswandlungseinrichtung geleitet wird. Bei Verwendung beider Spannungswandlungseinrichtungen wird in der Steuerungseinrichtung insbesondere eine Parallelverbindung zwischen der ersten energieliefernden Einheit mit der ersten Spannungswandlungseinrichtung und der zweiten Spannungswandlungseinrichtung aktiviert, so dass die elektrische Spannung an beiden Spannungswandlungseinrichtungen anliegt. Die zweite energieliefernde Einheit ist über die Steuerungseinrichtung von der bzw. den Spannungswandlungseinrichtung/en entkoppelt. Dieser Steuerungsmodus bzw. die dabei realisierte Schaltungsvariante bietet beispielsweise Vorteile, wenn jeweils ein Verbraucher der Verbrauchereinheit der ersten und/oder der zweiten Spannungswandlungseinrichtung zugeordnet und zu versorgen ist und die zweite energieliefernde Einheit, beispielsweise ein Batteriesystem, ausgefallen ist oder geschont werden soll. Im Luftfahrtbetrieb kann Letzteres beispielsweise während des Bodenbetriebs, des Reisefluges oder des Sinkflugs der Fall sein, wobei in der Regel vergleichsweise geringe Leistungen durch die Verbrauchereinheit angefordert werden.

In einer weiteren der wahlweisen Verfahrensvarianten wird die elektrische Energie zur Energieversorgung der Verbrauchereinheit nach Vorgabe bzw. durch entsprechende Einstellung der Steuerungseinrichtung in dem zweiten Steuerungsmodus nur der zweiten energieliefernden Einheit entnommen, wobei der elektrische Strom wahlweise über die erste Spannungswandlungseinrichtung und/oder über die zweite Spannungswandlungseinrichtung geleitet wird. Bei Verwendung beider Spannungswandlungseinrichtungen wird in der Steuerungseinrichtung insbesondere eine Parallelverbindung zwischen der zweiten energieliefernden Einheit mit der ersten Spannungswandlungseinrichtung und der zweiten Spannungswandlungseinrichtung aktiviert, so dass die elektrische Spannung an beiden Spannungswandlungseinrichtungen anliegt. Die erste energieliefernde Einheit ist über die Steuerungseinrichtung von der bzw. den Spannungswandlungseinrichtung/en entkoppelt. Dieser Steuerungsmodus ist z. B. zweckmäßig bei Ausfall der ersten energieliefernden Einheit, beispielsweise des Brennstoffzellensystems, oder wenn diese geschont werden soll. Letzteres kann beispielsweise bei deren Überhitzung sinnvoll sein.

In der erfindungsgemäßen Ausführung des Verfahrens wird die elektrische Energie zur Energieversorgung der Verbrauchereinheit nach Vorgabe bzw. durch entsprechende Einstellung der Steuerungseinrichtung in dem dritten Steuerungsmodus beiden energieliefernden Einheiten entnommen, die mittels einer Parallelverbindung der Teilstränge (über die Steuerungseinrichtung) miteinander elektrisch gekoppelt sind, wobei der gesamte elektrische Strom für die Verbrauchereinheit wahlweise über die erste Spannungswandlungseinrichtung und/oder über die zweite Spannungswandlungseinrichtung geleitet wird. Die Leitung über lediglich eine der Spannungswandlungseinrichtungen kann insbesondere dann vorteilhaft sein, wenn die jeweils andere Spannungswandlungseinrichtung (oder ein damit gekoppelter Verbraucher) ausgefallen ist.

In dieser Verfahrensvariante kann das Antriebssystem in einer Art "Direkt-Hybrid-Modus" betrieben werden, wobei die Spannungslagen der energieliefernden Einheiten, d. h. deren jeweilige Spannungsbereiche, in denen sie elektrische Leistung effizient bereitstellen können, ohne Zwischenschaltung einer weiteren Spannungswandlungseinrichtung aufeinander abgestimmt sind. Die Spannungslagen sind dann derart abgestimmt, dass sie in einem gewissen Leistungsbereich überlappen. So kann sich ein selbstregelndes System ergeben, bei dem je nach von der Verbrauchereinheit angeforderter Leistung die entsprechenden energieliefernden Einheiten anteilig oder alleinig Energie liefern. Beispielsweise können die Spannungslagen derart aufeinander abgestimmt sein, dass geringe Leistungsanforderungen, z. B. in einem Reiseflug oder im Bodenbetrieb eines Luftfahrzeuges, von einem Brennstoffzellensystem bedient werden, und hohe Leistungsanforderungen, z. B. in der Startphase des Luftfahrzeuges, zumindest großteils aus einem Batteriesystem. Dazwischenliegende Leistungsanforderungen können z. B. anteilig von beiden energieliefernden Einheiten bedient werden. So ergibt sich die Möglichkeit, beide energieliefernde Einheiten zusammen auf die Spannungswandlungseinrichtungen zu schalten. Dies ermöglicht bei Ausfall einer der beiden Spannungswandlungseinrichtungen dennoch aus beiden energieliefernden Einheiten elektrische Energie zu beziehen. Bei Ausfall einer Komponente ist kein externes Umschalten nötig, was einen Zeitgewinn und erhöhte Sicherheit insbesondere bei sensiblen Betriebsmodi, beispielsweise der Startphase eines Luftfahrzeugs, mit sich bringt. Zudem führt dies zu einer geringeren Fehleranfälligkeit des Antriebssystems. Wenn die Spannungslagen der energieliefernden Einheiten derart aufeinander abgestimmt sind, dass auf die zusätzliche Spannungswandlungseinrichtung verzichtet werden kann, kann dies zusätzliche Vorteile ergeben, wie einen geringen Steuerungs- bzw. Regelungsaufwand ohne zusätzliche Verluste aufgrund der weiteren vorhandenen Spannungswandlungseinrichtung.

Alternativ kann diese Verfahrensvariante auch durch die Zwischenschaltung zusätzlicher Spannungswandlungseinrichtungen zwischen die energieliefernden Einheiten umgesetzt werden. Auch so kann erreicht werden, dass die Spannungsbereiche, in denen jeweils elektrische Leistung durch die energieliefernden Einheiten bereitgestellt werden kann, überlappen, dann unter Zwischenschaltung der zusätzlichen Spannungswandlungseinrichtungen.

In der erfindungsgemäßen weiteren wahlweisen Verfahrensvariante kann vorgesehen sein, dass die elektrische Energie zur Energieversorgung der Verbrauchereinheit nach Vorgabe bzw. entsprechende Einstellung der Steuerungseinrichtung in einem vierten Steuerungsmodus beiden energieliefernden Einheiten entnommen wird, wobei die Teilstränge, insbesondere durch deaktivierte Parallelverbindung, voneinander elektrisch entkoppelt sind. Dabei wird in einer Variante der elektrische Strom der ersten energieliefernden Einheit über die erste Spannungswandlungseinrichtung und der elektrische Strom der zweiten energieliefernden Einheit über die zweite Spannungswandlungseinrichtung geleitet. In einer anderen Variante wird der elektrische Strom der ersten energieliefernden Einheit über die zweite Spannungswandlungseinrichtung und der elektrische Strom der zweiten energieliefernden Einheit über die erste Spannungswandlungseinrichtung geleitet.

Bei dieser erfindungsgemäßen Verfahrensvariante ergibt sich jeweils eine Art "Parallel-Hybrid-Modus", mit jeweils voneinander entkoppelten Teilsträngen bzw. Leitungswegen von den energieliefernden Einheiten zu der Verbrauchereinheit. So können vorteilhaft die energieliefernden Einheiten auf voneinander unabhängigen Spannungslagen betrieben werden. Die beiden Spannungswandlungseinrichtungen können aufeinander abgestimmte Ausgangsspannungen aufweisen, um z. B. einen oder mehrere Verbraucher mit der gleichen Spannung zu versorgen. Die Verfahrensvariante kann beispielsweise vorteilhaft sein, wenn an die beiden entkoppelten Teilstränge des Energielieferstrangs jeweils ein Verbraucher gekoppelt ist und diese gezielt abwechselnd voneinander betrieben werden. Zudem kann die aus den jeweiligen energieliefernden Einheiten entnommene elektrische Energie bzw. Leistung durch Vorgabe der Spannung (z. B. über die jeweilige Spannungswandlungseinrichtung) gesteuert bzw. geregelt werden. Bei Kopplung jeweils unabhängiger Verbraucher an die Spannungswandlungseinrichtungen bilden die beiden Teilstränge Redundanz bei Ausfall einer Komponente in dem jeweils anderen Teilstrang. Soll alternativ der "Direkt-Hybrid-Modus" ermöglicht werden, ist eine Abstimmung der Spannungslagen der energieliefernden Einheiten sinnvoll.

Vorzugsweise kann zumindest eine der energieliefernden Einheiten während des Betriebs über die andere energieliefernde Einheit (passiv) oder über die Verbrauchereinheit (aktiv durch Rekuperation) geladen werden. So kann beispielsweise in dem "Direkt-Hybrid-Modus" ein passiver Ladebetrieb möglich sein, wobei Energie ohne aktive zusätzliche Steuerung von einer zu der anderen energieliefernden Einheit fließt. Dabei kann elektrische Energie insbesondere ohne Spannungsumwandlung von beispielsweise dem Brennstoffzellensystem zu beispielsweise dem Batteriesystem fließen. Zudem können zusätzliche elektrische Verbindungsmittel vorhanden sein, durch die auch im "Parallel-Hybrid-Modus" oder bei alleiniger Energieentnahme aus einer der energieliefernden Einheiten (z. B. dem Brennstoffzellensystem) diese zusätzlich die andere energieliefernde Einheit (beispielsweise das Batteriesystem) laden kann. Durch die Lademöglichkeiten kann ein vorteilhaftes Energiemanagement des Antriebssystems bereitgestellt werden.

Bevorzugte Ausbildungsvarianten des hybriden elektrischen Antriebssystems sind im Zusammenhang mit den bevorzugten Ausführungsvarianten des Verfahrens sinngemäß beschrieben.

Nachfolgend wird die Erfindung anhand von Ausführungsbeispielen unter Bezugnahme auf die Zeichnungen näher erläutert. Es zeigen:
- Fig. 1: ein Blockschaltbild eines mit zwei energieliefernden Einheiten versorgten hybriden elektrischen Antriebssystems mit zwei Spannungswandlungseinrichtungen und einer vorgeschalteten Steuerungseinrichtung in einer ersten Schaltungsvariante,
- Fig. 2: ein Blockschaltbild des hybriden elektrischen Antriebssystems gemäß Fig. 1 in einer zweiten Schaltungsvariante,
- Fig. 3: ein Blockschaltbild des hybriden elektrischen Antriebssystems gemäß Fig. 1 in einer dritten Schaltungsvariante,
- Fig. 4: ein Blockschaltbild des hybriden elektrischen Antriebssystems gemäß Fig. 1 in einer vierten Schaltungsvariante,
- Fig. 5: ein Blockschaltbild des hybriden elektrischen Antriebssystems gemäß Fig. 1 in einer fünften Schaltungsvariante und
- Fig. 6: ein Diagramm mit Spannungs-Leistungs-Kennlinien zweier aufeinander abgestimmter energieliefernder Einheiten.

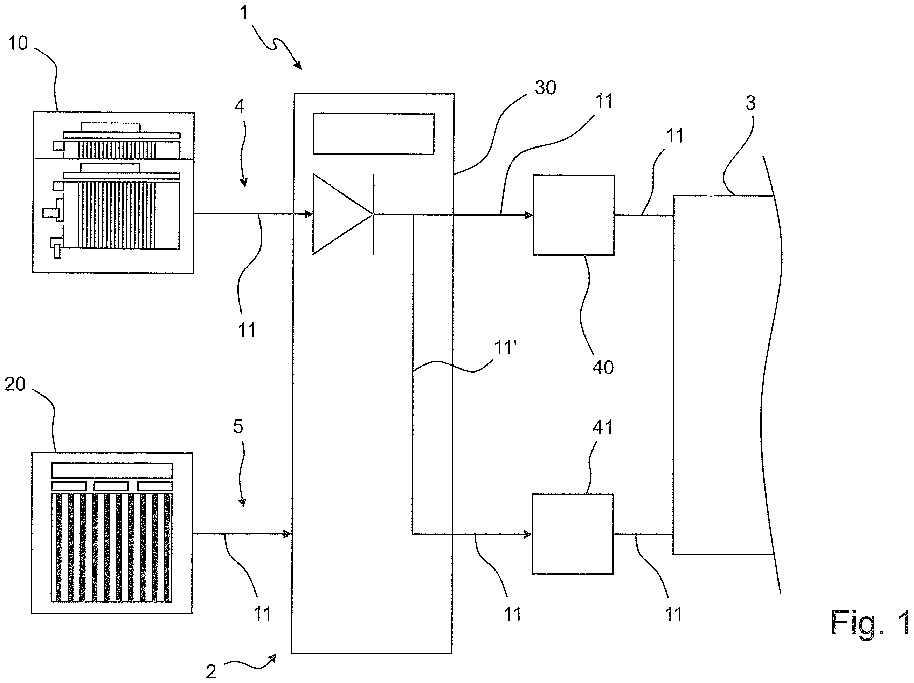

Fig. 1 zeigt ein vereinfachtes Blockschaltbild eines hybriden elektrischen Antriebssystems 1. Das Antriebssystem 1 weist eine Verbrauchereinheit 3 auf, die zu ihrer Energieversorgung mit einem Energielieferstrang 2 elektrisch gekoppelt ist. Die Verbrauchereinheit 3 ist nicht näher definiert und kann einen oder mehrere beliebige, mit Gleich- oder Wechselspannung zu versorgende elektrische Verbraucher umfassen, der bzw. die z. B. durch einen bzw. mehrere (ggf. redundante) Antrieb/e für ein Luftfahrzeug gebildet sein können.

Der Energielieferstrang 2 umfasst zwei parallele Teilstränge 4, 5 mit zumindest zwei energieliefernden Einheiten 10, 20 unterschiedlicher Art, (jeweils zumindest eine in einem Teilstrang 4, 5). Vorteilhaft zum Bedienen unterschiedlicher Anforderungen an die Energieversorgung kann eine Kombination einer energieliefernden Einheit mit einer hohen Kapazität bzw. Energiedichte mit einer energieliefernden Einheit zum Bedienen kurzzeitig hoher Leistungsspitzen sein. Beispielsweise kann es sich bei der ersten energieliefernden Einheit 10 um ein Aggregat zur Energieumwandung aus einem Brennstoff, beispielsweise um ein Brennstoffzellensystem oder ein Verbrennungsaggregat mit einem Generator, handeln. Bei der zweiten energieliefernden Einheit 20 kann es sich z. B. um ein Batteriesystem, oder auch ein Supercap-System, handeln.

Weiterhin umfasst der Energielieferstrang 2 eine Steuerungseinrichtung 30, mit der die energieliefernden Einheiten 10, 20 über elektrische Verbindungsmittel 11 elektrisch koppelbar oder gekoppelt sind. Die Steuerungseinrichtung 30 dient als Energiefluss steuernde Komponente, wobei sie als eine Art Leistung-Management-Modul die Verschaltung der energieliefernden Einheiten 10, 20 mit zwei Spannungswandlungseinrichtungen 40, 41 bzw. darüber mit der Verbrauchereinheit 3 steuert bzw. regelt, was z. B. über entsprechende Steuerungsprogramme und/oder in Abhängigkeit von vorgegebenen oder vorgebbaren Einstell- bzw. Regelparametern erfolgen kann.

Die beiden Spannungswandlungseinrichtungen 40, 41 sind der Steuerungseinrichtung 30 nachgeschaltet, d. h. zwischen der Steuerungseinrichtung 30 und der Verbrauchereinheit 3, und dabei parallel zueinander, angeordnet. Die Spannungswandlungseinrichtungen 40, 41 dienen der Umwandlung der durch eine oder beide energieliefernde Einheit/en 10, 20 gelieferten Gleichspannung (oder ggf. Wechelspannung) in eine von der Verbrauchereinheit 3 benötigten Spannung. Dies kann z. B. ein anderes Gleichspannungsniveau oder eine Wechselspannungsgröße wie Amplitude, Frequenz oder Effektivwert sein.

Durch eine derartige Ausbildung wird vorteilhaft ein hochredundantes und damit betriebssicheres Antriebssystem 1 bereitgestellt, das beispielsweise auch bei Luftfahrzeugen einsetzbar ist und flexibel auf unterschiedliche Situationen reagieren kann.

Bei einem Ausfall von Hauptkomponenten, wie einer der energieliefernden Einheiten 10, 20 und/oder einer der Spannungswandlungseinrichtungen 40, 41, kann über die Steuerungseinrichtung 30 auf die entsprechend andere vorhandene Komponente umgeschaltet werden, um den Verbraucher mit ausreichend elektrischer Energie zu versorgen. Weiterhin kann vorteilhaft der Energiefluss in dem Energielieferstrang 2 durch die Steuerungseinrichtung 30 gemäß unterschiedlicher Steuerungsmodi bzw. Schaltungsvarianten variiert werden, auch während des laufenden Betriebes der Verbrauchereinheit 3. Dies erlaubt eine Anpassung des Energieflusses an unterschiedliche Betriebsmodi der Verbrauchereinheit 3, insbesondere optimiert auf deren aktuelle Leistungsanforderung. So können für einen jeweiligen Betriebsmodus höhere Redundanzen erzielt werden und/oder höhere Wirkungsgrade erzielt und/oder die energieliefernden Einheiten 10, 20 schonender betrieben und/oder die Leistungsaufteilung zwischen den energieliefernden Einheiten 10, 20 gezielt gesteuert bzw. geregelt werden.

Fig. 1 zeigt eine erste Schaltungsvariante, bei der die elektrische Energie zur Energieversorgung der Verbrauchereinheit 3 nur der ersten energieliefernden Einheit 10, beispielsweise einem Brennstoffzellensystem, entnommen wird. Der elektrische Strom wird über eine innerhalb der Steuerungseinrichtung 30 aktivierte Parallelverbindung 11' der Verbindungsmittel 11 über beide Spannungswandlungseinrichtungen 40, 41 geleitet. Die zweite energiewandelnde Einheit 20 ist durch die Steuerungseinrichtung 30 von den beiden Spannungswandlungseinrichtungen 40, 41 und damit von der Verbrauchereinheit 3 entkoppelt. Diese Schaltungsvariante bietet beispielsweise Vorteile, wenn jeweils ein zu versorgender Verbraucher der Verbrauchereinheit 3 der ersten und der zweiten Spannungswandlungseinrichtung 40, 41 zugeordnet ist und die zweite energieliefernde Einheit 20, beispielsweise ein Batteriesystem, ausgefallen ist oder geschont werden soll. Im Luftfahrtbetrieb kann Letzteres beispielsweise während des Bodenbetriebs, des Reisefluges oder des Sinkflugs der Fall sein, da hierbei in der Regel vergleichsweise geringe Leistungen durch die Verbrauchereinheit 3 angefordert werden.

Die aus der energieliefernden Einheit 10 entnommene elektrische Energie kann ebenso ausschließlich über die erste Spannungswandlungseinrichtung 40 oder, dann über die Parallelverbindung 11' und bei entkoppelter erster Spannungswandlungseinrichtung 40, über die zweite Spannungswandlungseinrichtung 41 geleitet werden (hier nicht gezeigt). Dies ist z. B. bei einem Ausfall der jeweils anderen Spannungswandlungseinrichtung 41, 40 (oder einem daran angeschlossenen Verbraucher der Verbrauchereinheit 3) zweckdienlich.

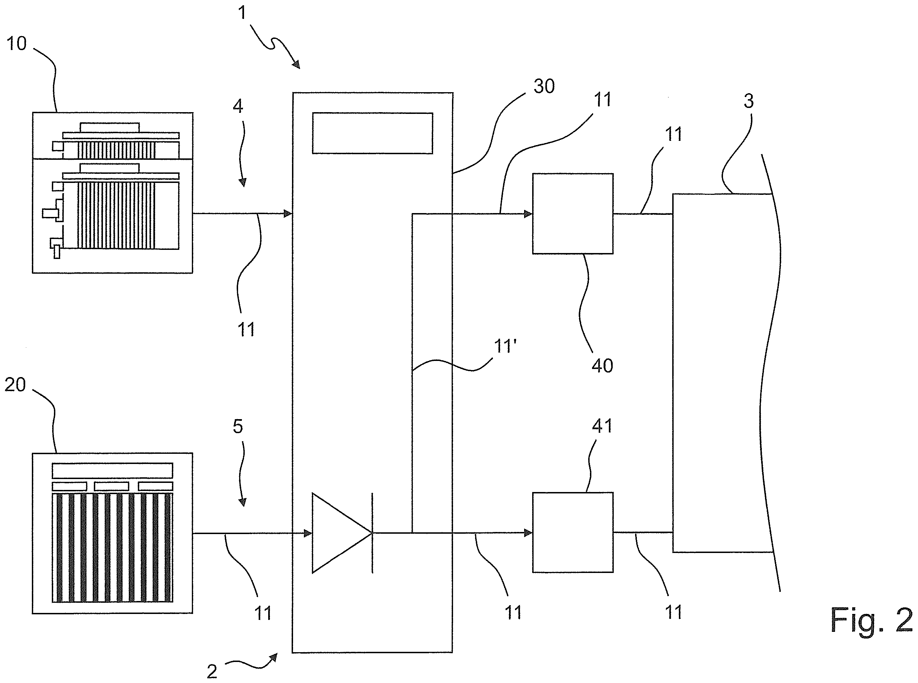

Fig. 2 zeigt eine zweite Schaltungsvariante, bei der die elektrische Energie zur Energieversorgung der Verbrauchereinheit 3 ausschließlich der zweiten energieliefernden Einheit 20, beispielsweise dem Batteriesystem, entnommen wird. Der elektrische Strom wird mittels der Parallelverbindung 11' über beide Spannungswandlungseinrichtungen 40, 41 geleitet. Möglich wäre auch eine Leitung des elektrischen Stroms ausschließlich über die erste Spannungswandlungseinrichtung 40 oder die zweite Spannungswandlungseinrichtung 41 (hier nicht gezeigt). Diese Schaltungsvariante ist zweckmäßig bei Ausfall der ersten energieliefernden Einheit 10, beispielsweise des Brennstoffzellensystems, oder wenn diese geschont werden soll. Letzteres kann beispielsweise bei deren Überhitzung sinnvoll sein.

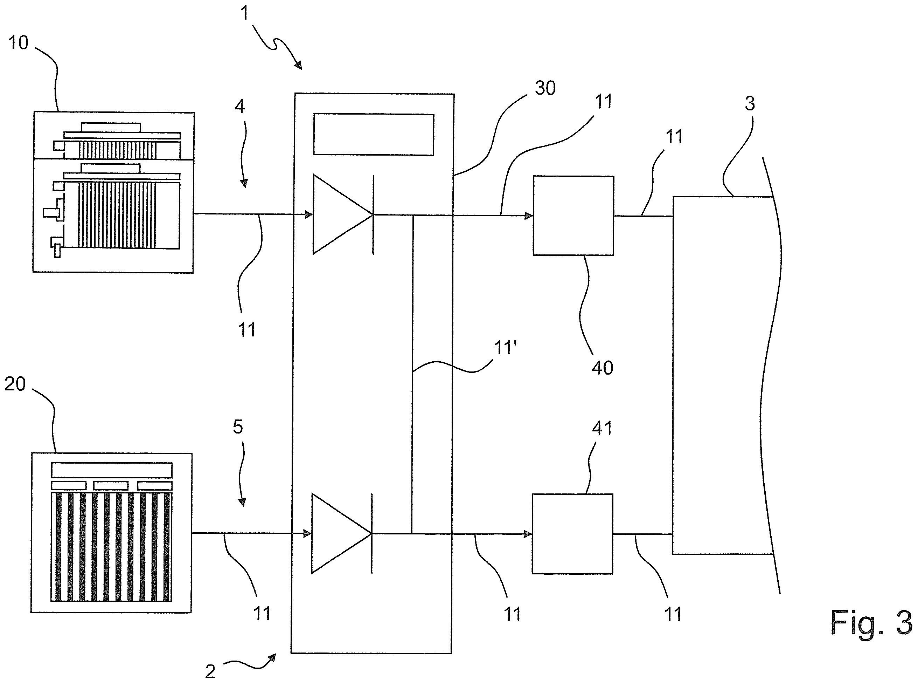

Fig. 3 zeigt eine dritte Schaltungsvariante, bei der die elektrische Energie zur Versorgung der Verbrauchereinheit 3 den beiden energieliefernden Einheiten 10, 20 entnommen wird. Die gesamte elektrische Energie wird, bei mittels der Steuerungseinrichtung 30 aktivierter Parallelverbindung 11', gleichzeitig über die beiden Spannungswandlungseinrichtungen 40, 41 geleitet. Möglich wäre auch, dass die gesamte elektrische Energie aus den beiden energieliefernden Einheiten 10, 20 bei aktivierter Parallelverbindung 11' ausschließlich über die erste oder die zweite Spannungswandlungseinrichtung 40, 41 geführt wird (hier nicht gezeigt). Dies wäre insbesondere bei einem Ausfall einer der Spannungswandlungseinrichtungen 40, 41 (oder einem damit gekoppelten Verbraucher) zur Ausfallsicherung zweckdienlich.

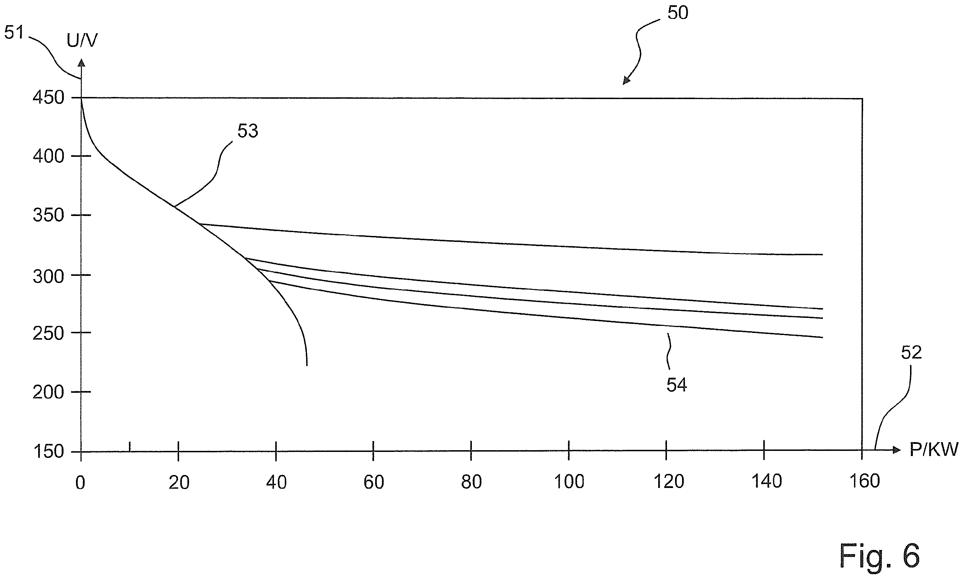

In diesem Steuerungsmodus bzw. der dabei realisierten Schaltungsvariante kann, wie hier gezeigt, das Antriebssystem 1 in einer Art "Direkt-Hybrid-Modus" betrieben werden, wobei die energieliefernden Einheiten 10, 20 mit ihren Spannungslagen (d. h. ihren Spannungsbereichen, in denen sie jeweils effizient elektrische Leistung bereitstellen können) aufeinander abgestimmt sind, d. h. ohne Zwischenschaltung einer zusätzlichen Spannungswandlungseinrichtung. Zweckmäßigerweise können dabei Spannungs-Leistungs-Kennlinien der energieliefernden Einheiten 10, 20 in einem bestimmten Leistungsbereich überlappen (vgl. z. B. Fig. 6). Bei einer derartigen Konfiguration kann sich ein selbstregelndes System ergeben, bei dem je nach angeforderter Leistung die entsprechenden energieliefernden Einheiten 10, 20 anteilig oder alleinig beansprucht werden. So ergibt sich ein geringer Steuerungs- bzw. Regelungsaufwand ohne zusätzlichen Verlust durch Vorhandensein einer weiteren Spannungswandlungseinrichtung. Bei Ausfall einer Komponente ist kein externes Umschalten nötig, was Zeitgewinn und Sicherheit insbesondere in sensiblen Betriebsmodi, beispielsweise der Startphase eines Luftfahrzeugs, bietet. Zudem führt dies zu einer geringeren Fehleranfälligkeit des Antriebssystems 1. Alternativ zu dem "Direkt-Hybrid-Modus" wäre bei der dritten Schaltungsvariante auch eine Abstimmung der Spannungsbereiche unter Zwischenschaltung zusätzlicher Spannungswandlungseinrichtungen möglich (hier nicht gezeigt).

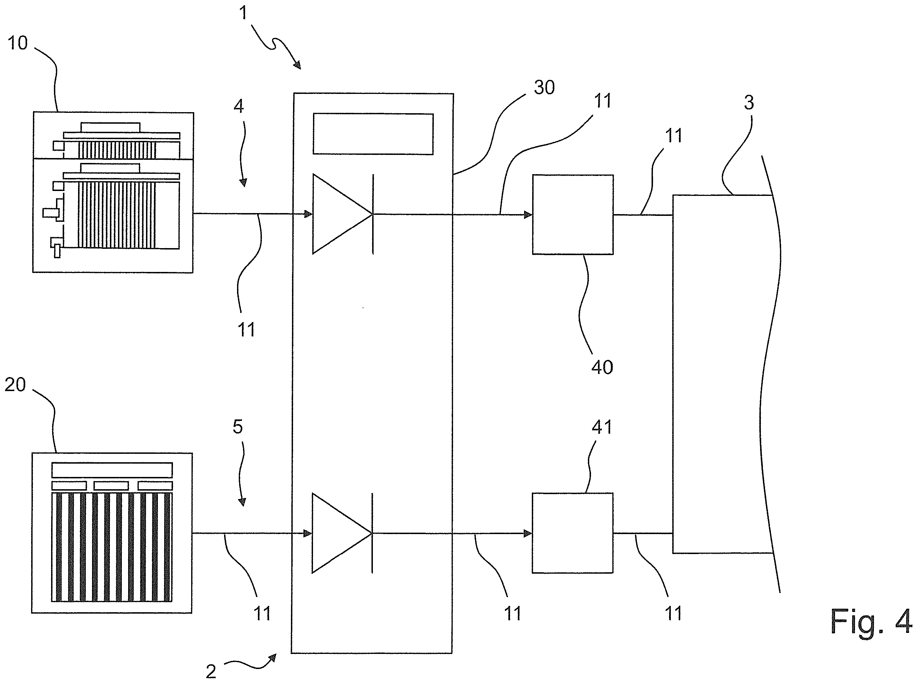

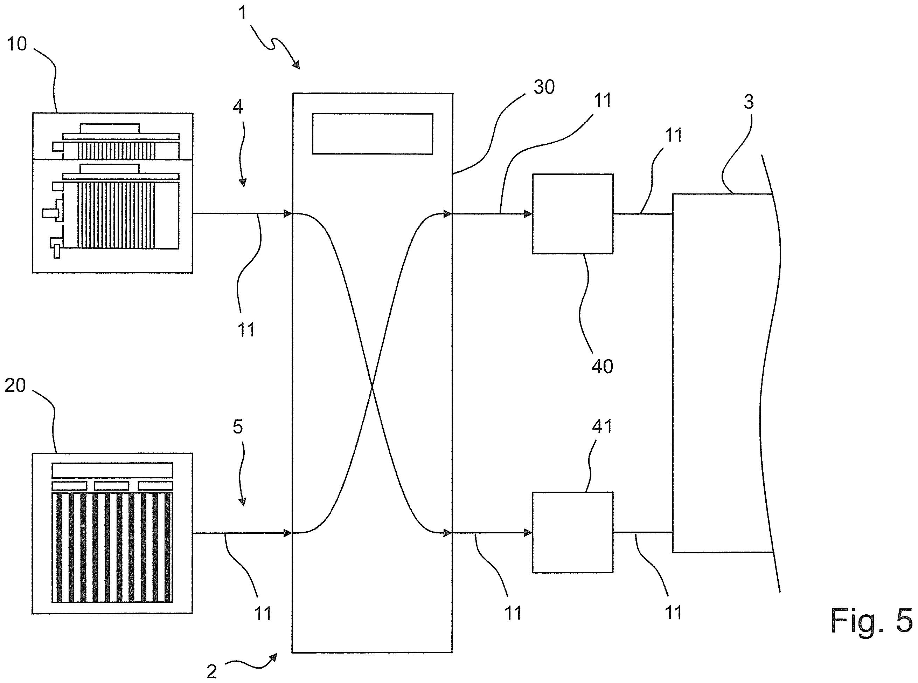

Fig. 4 und Fig. 5 zeigen eine vierte und eine fünfte Schaltungsvariante, bei der die Parallelverbindung 11' deaktiviert ist. Die elektrische Energie wird beiden energieliefernden Einheiten 10, 20 entnommen, wobei in dem Steuerungsmodus mit der vierten Schaltungsvariante, gemäß Fig. 4, der elektrische Strom aus der ersten energieliefernden Einheit 10 über die erste Spannungswandlungseinrichtung 40 und der elektrische Strom aus der zweiten energieliefernden Einheit 20 über die zweite Spannungswandlungseinrichtung 41 geleitet wird. In dem Steuerungsmodus mit der fünften Schaltungsvariante, gemäß Fig. 5, wird der elektrische Strom aus der ersten energieliefernden Einheit 10 über die zweite Spannungswandlungseinrichtung 41 und der elektrische Strom aus der zweiten energieliefernden Einheit 20 über die erste Spannungswandlungseinrichtung 40 geleitet. So ergibt sich eine Art "Parallel-Hybrid-Modus", wobei die energieliefernden Einheiten 10, 20 im Parallelbetrieb in den Teilsträngen 4, 5 elektrisch voneinander entkoppelt sind. So können vorteilhaft die energieliefernden Einheiten 10, 20 unabhängig voneinander betrieben werden und ggf. unterschiedliche Spannungslagen aufweisen, ohne dass eine zusätzliche Spannungswandlungseinrichtung zwischen den beiden energieliefernden Einheiten 10, 20 vorhanden ist, um deren Spannungen aufeinander abzustimmen.

Um zusätzlich die Verfahrensvariante gemäß der dritten Schaltungsvariante, insbesondere dem "Direkt-Hybrid-Modus", zu ermöglichen, sind die Spannungsbereiche, insbesondere die Spannungslagen der energieliefernden Einheiten 10, 20, aufeinander abzustimmen. In dem Falle nicht abgestimmter Spannungsbereiche bzw. Spannungslagen, wie es sich auch im Laufe der Betriebsdauer z. B. durch Degradation zumindest einer der energieliefernden Einheiten 10, 20 ergeben kann, kann vorteilhaft der Betrieb des Antriebssystems über den "Parallel-Hybrid-Modus" aufrechterhalten werden.

Die Schaltungsvarianten vier und fünf können beispielsweise vorteilhaft sein, wenn an die beiden entkoppelten Teilstränge 4, 5 des Energielieferstrangs jeweils ein Verbraucher bzw. eine Verbrauchereinheit gekoppelt ist und diese gezielt abwechselnd voneinander betrieben werden. Zudem kann die aus den jeweiligen energieliefernden Einheiten entnommene elektrische Energie bzw. Leistung durch Vorgabe der Spannung (z. B. über die jeweilige Spannungswandlungseinrichtung 40, 41) gesteuert bzw. geregelt werden.

Zusätzlich zu den gezeigten Schaltungsvarianten bezüglich der Abgabe elektrischer Energie an die Verbrauchereinheit 3 kann eine der vorhandenen energieliefernden Einheiten 10, 20, insbesondere wenn diese als energiespeichernde Komponente, beispielsweise als Batteriesystem, ausgebildet ist, während des (Flug-) Betriebs geladen werden. So ist beispielsweise in dem "Direkt-Hybrid-Modus" ein passiver Ladebetrieb möglich. Dabei kann elektrische Energie insbesondere ohne zusätzliche Laderegelungseinheit von einer der energieliefernden Einheiten 10, 20, beispielsweise dem Brennstoffzellensystem, zu der anderen der energieliefernden Einheiten 10, 20, beispielsweise dem Batteriesystem, fließen. Zudem können zusätzliche Verbindungsmittel 11 vorhanden sein (hier nicht gezeigt), durch die auch im "Parallel-Hybrid-Modus" oder bei alleiniger Energieentnahme aus einer der energieliefernden Einheiten 10, 20 (z. B. dem Brennstoffzellensystem) diese zusätzlich die andere energieliefernde Einheit 20, 10 (beispielsweise das Batteriesystem) laden kann. Alternativ oder zusätzlich können auch Mittel vorhanden sein, um die energielieferndeIn Einheit/en 10, 20 aktiv über Rekuperation durch Energieerzeugung über die Verbrauchereinheit 3 zu laden.

Fig. 6 zeigt ein Diagramm 50 mit über einer Leistung 52 aufgetragener Spannung 51. In dem Diagramm 50 sind Spannungs-Leistungs-Kennlinien 53, 54 zweier energieliefernder Einheiten 10, 20 aufgetragen, wie sie beispielsweise für eine Anwendung in der Luftfahrt, ohne Zwischenschaltung einer zusätzlichen Spannungswandlungseinrichtung, vorteilhaft aufeinander abgestimmt sein können. Die Kennlinie 53 stellt beispielhaft die eines Brennstoffzellensystems als erste energieliefernde Einheit 10 und die zweiten Kennlinien 54 die eines Batteriesystems (mehrere Kennlinien, die jeweils unterschiedlichen Ladezuständen zugeordnet sind) als zweite energieliefernde Einheit 20 dar. Die beiden energieliefernden Einheiten 10, 20 sind derart aufeinander abgestimmt, dass sich in Betriebspunkten mit geringer Leistungsanforderung, z. B. bis ca. 25 kW, wie während des Reiseflugs, Sinkflugs oder während des Bodenbetriebs, diese selbstregelnd über die Brennstoffzelle deckt. Das Batteriesystem kann dabei geschont werden. In einem Betriebspunkt mit mittlerer Leistungsanforderung, z. B. zwischen ca. 25 und 45 kW, wird diese selbstregelnd sowohl von der Brennstoffzelle als auch von dem Batteriesystem gedeckt, wobei der jeweilige Anteil auch von dem Ladezustand des Batteriesystems abhängt. Bei hohen Leistungsanforderungen von z. B. größer als ca. 45 kW, wie beispielsweise während der Startphase, stellt sich ein größerer Energiefluss bzw. ein höherer entnommener Leistungsanteil aus dem Batteriesystem als aus dem Brennstoffzellensystem ein. Durch diese Auslegung ergibt sich ein Antriebssystem 1, das in der Schaltungsvariante "Direkt-Hybrid-Modus" vorteilhaft selbstregelnd betrieben werden kann.

## Patentansprüche

1. Verfahren zum Betreiben eines hybriden elektrischen Antriebssystems (1), bei dem elektrische Energie aus zumindest zwei, in jeweils einem Teilstrang (4, 5) eines Energielieferstrangs (2) angeordneten, energieliefernden Einheiten (10, 20) aus dem Energielieferstrang (2) einer Verbrauchereinheit (3) zu deren Energieversorgung zugeführt werden kann, wobei die elektrische Energie vor Zufuhr in die Verbrauchereinheit (3) über zwei in dem Energielieferstrang (2) vorhandene erste und zweite Spannungswandlungseinrichtungen (40, 41) geführt werden kann,
wobei die zweite Spannungswandlungseinrichtung parallel zu der ersten Spannungswandlungseinrichtung (40) angeordnet ist,
wobei die elektrische Energie vor Zufuhr in zumindest eine der beiden Spannungswandlungseinrichtungen (40, 41) über eine Steuerungseinrichtung (30) zur Steuerung oder Regelung des Energieflusses geführt wird, die mit beiden Teilsträngen (4, 5) elektrisch gekoppelt ist, und in der die Steuerung oder Regelung nach Maßgabe unterschiedlicher Steuerungsmodi durchführbar ist,
wobei die elektrische Energie zur Energieversorgung der Verbrauchereinheit (3) nach Vorgabe der Steuerungseinrichtung (30) in einem ersten Steuerungsmodus nur der ersten energieliefernden Einheit (10) entnommen wird, wobei der elektrische Strom wahlweise über die erste Spannungswandlungseinrichtung (40), die zweite Spannungswandlungseinrichtung (41), oder die beiden Spannungswandlungseinrichtungen (40, 41) geleitet wird,
wobei die elektrische Energie zur Energieversorgung der Verbrauchereinheit (3) nach Vorgabe der Steuerungseinrichtung (30) in einem zweiten Steuerungsmodus nur der zweiten energieliefernden Einheit (20) entnommen wird, wobei der elektrische Strom wahlweise über die erste Spannungswandlungseinrichtung (40), die zweite Spannungswandlungseinrichtung (41) oder die beiden Spannungswandlungseinrichtungen (40, 41) geleitet wird,
wobei die elektrische Energie zur Energieversorgung der Verbrauchereinheit (3) nach Vorgabe der Steuerungseinrichtung (30) in einem dritten Steuerungsmodus beiden energieliefernden Einheiten (10, 20) entnommen wird, die mittels einer Parallelverbindung (1) der Teilstränge (4, 5) miteinander elektrisch gekoppelt sind, wobei der gesamte elektrische Strom für die Verbrauchereinheit (3) wahlweise über die erste Spannungswandlungseinrichtung (40), die zweite Spannungswandlungseinrichtung (41), oder die beiden Spannungswandlungseinrichtungen (40, 41) geleitet wird,
wobei die elektrische Energie zur Energieversorgung der Verbrauchereinheit (3) nach Vorgabe der Steuerungseinrichtung (30) in einem vierten Steuerungsmodus beiden energieliefernden Einheiten (10, 20) entnommen wird, wobei die Teilstränge (4, 5) voneinander elektrisch entkoppelt sind,
**dadurch gekennzeichnet, dass** wahlweise:
der elektrische Strom der ersten energieliefernden Einheit (10) über die erste Spannungswandlungseinrichtung (40) und der elektrische Strom der zweiten energieliefernden Einheit (20) über die zweite Spannungswandlungseinrichtung (41) geleitet wird,
oder
der elektrische Strom der ersten energieliefernden Einheit (10) über die zweite Spannungswandlungseinrichtung (41) und der elektrische Strom der zweiten energieliefernden Einheit (20) über die erste Spannungswandlungseinrichtung (40) geleitet wird,
wobei die energieliefernden Einheiten (10, 20) derart bei dem dritten Steuerungsmodus aufeinander abgestimmt sind, dass die Spannungsbereiche, in denen sie jeweils elektrische Leistung bereitstellen können, überlappen.

2. Verfahren nach Anspruch 1,
**dadurch gekennzeichnet,**
**dass** zumindest eine der energieliefernden Einheiten (10, 20) während des Betriebs über die andere energieliefernde Einheit (20, 10) oder über die Verbrauchereinheit (3) geladen werden kann.

3. Hybrides elektrisches Antriebssystem (1) mit einer Verbrauchereinheit (3) und einem mit der Verbrauchereinheit (3) elektrisch gekoppelten Energielieferstrang (2), wobei der Energielieferstrang (2) zumindest zwei Teilstränge (4, 5) mit jeweils zumindest einer energieliefernden Einheit (10, 20)zur Energieversorgung der Verbrauchereinheit (3) mit elektrischer Energie und eine erste und eine zweite Spannungswandlungseinrichtung (40, 41) in dem Energielieferstrang zur Versorgung der Verbrauchereinheit (3) mit einer benötigten elektrischen Energie umfasst,
wobei die zweite Spannungswandlungseinrichtung (41) parallel zu der ersten Spannungswandlungseinrichtung (40) angeordnet ist und die Spannungswandlungseinrichtungen (40, 41) jeweils in einem Teilstrang (4, 5) angeordnet und in unterschiedlichen Steuerungsmodi in die elektrische Energieversorgung der Verbrauchereinheit (3) einbeziehbar sind,
wobei in dem Energielieferstrang (3) zwischen den energieliefernden Einheiten (10, 20) und den Spannungswandlungseinrichtungen (40, 41) eine Steuerungseinrichtung (30) zur Steuerung des elektrischen Energieflusses eingebunden ist, die mit den beiden Teilsträngen (4, 5) elektrisch gekoppelt ist,
wobei das Antriebssystem (1), insbesondere die Steuerungseinrichtung (30), dazu ausgebildet ist, ein Verfahren nach einem der Ansprüche 1 oder 2 durchzuführen,
wobei die energieliefernden Einheiten (10, 20) derart aufeinander abgestimmt sind, dass die Spannungsbereiche, in denen sie jeweils elektrische Leistung bereitstellen können, überlappen.

4. Hybrides elektrisches Antriebssystem (1) nach Anspruch 3,
**dadurch gekennzeichnet,**
**dass** die erste energieliefernde Einheit (10) durch ein Brennstoffzellensystem und/oder einen Verbrennungsmotor mit Generator und/oder eine Gasturbine mit Generator und/oder
**dass** die zweite energieliefernde Einheit (20) durch ein Batteriesystem und/oder durch ein Supercap-System
gebildet ist/sind.

5. Verwendung eines hybriden elektrischen Antriebssystems (1), nach Anspruch 3 oder 4, bei einem Luftfahrzeug.

## Claims

1. Method for operating a hybrid electric drive system (1) in which electrical energy from at least two energy-supplying units (10, 20), each arranged in a subline (4, 5) of an energy supply line (2), can be supplied from the energy supply line (2) to a consumer unit (3) for the purpose of supplying it with energy, wherein the electrical energy can be conveyed via two first and second voltage conversion devices (40, 41) present in the energy supply line (2) before it is fed to the consumer unit (3),
wherein the second voltage conversion device is arranged in parallel with the first voltage conversion device (40),
wherein the electrical energy, before being fed to at least one of the two voltage conversion devices (40, 41), is conveyed via a control device (30) for controlling or regulating the flow of energy, which is connected to both sublines (4, 5), and in which the control or regulation can be carried out in accordance with different control modes,
wherein the electrical energy used to supply energy to the consumer unit (3) is taken, according to the specifications of the control device (30), in a first control mode, only from the first energy-supplying unit (10), wherein the electrical current is routed selectively via the first voltage conversion device (40), the second voltage conversion device (41), or the two voltage conversion devices (40, 41),
wherein the electrical energy used to supply energy to the consumer unit (3), is taken, according to the specifications of the control device (30), in a second control mode, only from the second energy-supplying unit (20), wherein the electrical current is routed selectively via the first voltage conversion device (40), the second voltage conversion device (41), or the two voltage conversion devices (40, 41),
wherein the electrical energy used to supply energy to the consumer unit (3), is taken, according to the specifications of the control device (30), in a third control mode, from both energy-supplying units (10, 20), which are electrically coupled to each other via a parallel connection 1 of the sublines (4, 5), wherein the entire electrical current for the consumer unit (3) is routed selectively via the first voltage conversion device (40), the second voltage conversion device (41), or the two voltage conversion devices (40, 41),
wherein the electrical energy used to supply energy to the consumer unit (3), is taken, according to the specifications of the control device (30), in a fourth control mode, from both of the energy-supplying units (10, 20), wherein the sublines (4, 5) are electrically decoupled from each other,
**characterized in that**, either:
the electrical current of the first energy-supplying unit (10) is conveyed via the first voltage conversion device (40), and the electrical current of the second energy-supplying unit (20) is conveyed via the second voltage conversion device (41),
or
the electrical current of the first energy-supplying unit (10) is conveyed via the second voltage conversion device (41), and the electrical current of the second energy-supplying unit (20) is conveyed via the first voltage conversion device (40),
wherein the energy-supplying units (10, 20) are matched to one another in the third control mode in such a manner that each of the voltage ranges in which they can provide electrical power overlap.

2. Method according to claim 1,
**characterized in that**
at least one of the energy-supplying units (10, 20) can be charged during operation via the other energy-supplying unit (20, 10) or via the consumer unit (3).

3. Hybrid electric drive system (1) having a consumer unit (3) and an energy supply line (2) electrically coupled to the consumer unit (3), wherein the energy supply line (2) comprises at least two sublines (4, 5) each with at least one energy-supplying unit (10, 20) for supplying electrical energy to the consumer unit (3), and a first and a second voltage conversion device (40, 41) in the energy supply line for supplying the consumer unit (3) with the required electrical energy,
wherein the second voltage conversion device (41) is arranged in parallel to the first voltage conversion device (40), and the voltage conversion devices (40, 41) are each arranged in a subline (4, 5), and can be incorporated, in different control modes, into the electrical energy supply of the consumer unit (3),
wherein a control device (30) for controlling the electrical energy flow, which is electrically coupled to the two sublines (4, 5), is incorporated into the energy supply line (3) between the energy-supplying units (10, 20) and the voltage conversion devices (40, 41),
wherein the drive system (1) - in particular, the control device (30) - is designed to carry out a method according to one of claims 1 or 2,
wherein the energy-supplying units (10, 20) are matched to each other in such a manner that each of the voltage ranges in which they can provide electrical power overlap.

4. Hybrid electric drive system (1) according to claim 3,
**characterized in that**
the first energy-supplying unit (10) is formed by a fuel-cell system and/or an internal combustion engine with a generator and/or a gas turbine with a generator, and/or
the second energy-supplying unit (20) is formed by a battery system and/or by a supercapacitor system.

5. Use of a hybrid electric drive system (1), according to claim 3 or 4, in an aircraft.

## Revendications

1. Procédé permettant de faire fonctionner un système d'entraînement (1) électrique hybride, dans lequel de l'énergie électrique peut être acheminée à partir d'au moins deux unités fournisseuses d'énergie (10, 20) disposées dans respectivement un faisceau partiel (4, 5) d'un faisceau de fourniture d'énergie (2), à partir du faisceau de fourniture d'énergie (2) d'une unité de consommation (3) pour son alimentation en énergie, l'énergie électrique pouvant être conduite, avant d'être acheminée dans l'unité de consommation (3), par l'intermédiaire de deux premier et second dispositifs de conversion de tension (40, 41) présents dans le faisceau de fourniture d'énergie (2),
le second dispositif de conversion de tension étant disposé parallèlement au premier dispositif de conversion de tension (40),
l'énergie électrique étant conduite, avant d'être acheminée dans au moins l'un des deux dispositifs de conversion de tension (40, 41), par l'intermédiaire d'un dispositif de commande (30) permettant de commander ou de réguler le flux d'énergie, lequel dispositif de commande est couplé électriquement aux deux faisceaux partiels (4, 5) et dans lequel la commande ou la régulation peut être réalisée en fonction de différents modes de commande, l'énergie électrique permettant l'alimentation en énergie de l'unité de consommation (3) étant extraite uniquement de la première unité fournisseuse d'énergie (10) dans un premier mode de commande selon des instructions du dispositif de commande (30), le courant électrique étant sélectivement conduit par l'intermédiaire du premier dispositif de conversion de tension (40), du second dispositif de conversion de tension (41) ou des deux dispositifs de conversion de tension (40, 41), l'énergie électrique permettant l'alimentation en énergie de l'unité de consommation (3) étant extraite uniquement de la seconde unité fournisseuse d'énergie (20) dans un deuxième mode de commande selon des instructions du dispositif de commande (30), le courant électrique étant sélectivement conduit par l'intermédiaire du premier dispositif de conversion de tension (40), du second dispositif de conversion de tension (41) ou des deux dispositifs de conversion de tension (40, 41),
l'énergie électrique permettant l'alimentation en énergie de l'unité de consommation (3) étant extraite des deux unités fournisseuses d'énergie (10, 20) dans un troisième mode de commande selon des instructions du dispositif de commande (30), lesquelles unités étant couplées électriquement l'une à l'autre au moyen d'une liaison parallèle (1) des faisceaux partiels (4, 5), tout le courant électrique pour l'unité de consommation (3) étant sélectivement conduit par l'intermédiaire du premier dispositif de conversion de tension (40), du second dispositif de conversion de tension (41) ou des deux dispositifs de conversion de tension (40, 41),
l'énergie électrique permettant l'alimentation en énergie de l'unité de consommation (3) étant extraite des deux unités fournisseuses d'énergie (10, 20) dans un quatrième mode de commande selon des instructions du dispositif de commande (30), les faisceaux partiels (4, 5) étant découplés électriquement l'un de l'autre,
**caractérisé en ce que** sélectivement :
le courant électrique de la première unité fournisseuse d'énergie (10) est conduit par l'intermédiaire du premier dispositif de conversion de tension (40) et
le courant électrique de la seconde unité fournisseuse d'énergie (20) est conduit par l'intermédiaire du second dispositif de conversion de tension (41),
ou
le courant électrique de la première unité fournisseuse d'énergie (10) est conduit par l'intermédiaire du second dispositif de conversion de tension (41) et le courant électrique de la seconde unité fournisseuse d'énergie (20) est conduit par l'intermédiaire du premier dispositif de conversion de tension (40), dans le troisième mode de commande, les unités fournisseuses d'énergie (10, 20) étant adaptées l'une à l'autre de manière telle que les plages de tension, dans lesquelles elles peuvent respectivement fournir de la puissance électrique, se chevauchent.

2. Procédé selon la revendication 1,
**caractérisé en ce**
**qu'**au moins l'une des unités fournisseuses d'énergie (10, 20) peut être chargée pendant le fonctionnement par l'intermédiaire de l'autre unité fournisseuse d'énergie (20, 10) ou par l'intermédiaire de l'unité de consommation (3).

3. Système d'entraînement (1) électrique hybride comportant une unité de consommation (3) et un faisceau de fourniture d'énergie (2) couplé électriquement à l'unité de consommation (3), le faisceau de fourniture d'énergie (2) comprenant au moins deux faisceaux partiels (4, 5) comportant respectivement au moins une unité fournisseuse d'énergie (10, 20) permettant d'alimenter l'unité de consommation (3) en énergie électrique et un premier et un second dispositif de conversion de tension (40, 41) dans le faisceau de fourniture d'énergie permettant d'alimenter l'unité de consommation (3) en énergie électrique nécessaire,
le second dispositif de conversion de tension (41) étant disposé parallèlement au premier dispositif de conversion de tension (40) et les dispositifs de conversion de tension (40, 41) étant respectivement disposés dans un faisceau partiel (4, 5) et pouvant être placés dans différents modes de commande dans l'alimentation en énergie électrique de l'unité de consommation (3),
un dispositif de commande (30) permettant de commander le flux d'énergie électrique étant intégré dans le faisceau de fourniture d'énergie (3) entre les unités fournisseuses d'énergie (10, 20) et les dispositifs de conversion de tension (40, 41), lequel dispositif de commande étant couplé électriquement aux deux faisceaux partiels (4, 5), le système d'entraînement (1), en particulier le dispositif de commande (30), étant configuré pour mettre en oeuvre un procédé selon l'une des revendications 1 ou 2, les unités fournisseuses d'énergie (10, 20) étant adaptées l'une à l'autre de manière telle que les plages de tension, dans lesquelles elles peuvent respectivement fournir de la puissance électrique, se chevauchent.

4. Système d'entraînement (1) électrique hybride selon la revendication 3,
**caractérisé en ce**
**que** la première unité fournisseuse d'énergie (10) est formée par un système de piles à combustible et/ou un moteur à combustion interne comportant un générateur et/ou une turbine à gaz comportant un générateur et/ou
**que** la seconde unité fournisseuse d'énergie (20) est formée par un système de batterie et/ou par un système de supercondensateur.

5. Utilisation d'un système d'entraînement (1) électrique hybride selon la revendication 3 ou 4 dans un aéronef.
